# EUROPÄISCHE PATENTANMELDUNG

(11) **EP 3 698 890 A1**
(43) Veröffentlichungstag der Anmeldung: **26.08.2020**
(21) Anmeldenummer: 20159993.3
(22) Anmeldetag: 24.05.2017
(51) Int. Cl.: B08B 15/00, B08B 15/02, B29C 64/35, B29C 64/371, B29C 64/153, B33Y 40/00, B22F 3/105, B33Y 30/00

(54) **ANORDNUNG UND VERFAHREN ZUM ZUMINDEST TEILWEISEN INERTISIEREN EINES GASSTROMS DURCH WENIGSTENS EINE ABTRENNVORRICHTUNG**

(30) Priorität: 02.09.2016 DE 102016116501
(62) Teilanmeldung aus: 17172837.1
(71) Anmelder: CL Schutzrechtsverwaltungs GmbH, 96215 Lichtenfels (DE)
(72) Erfinder: Herzog, Frank Carsten, 96215 Lichtenfels (DE); Bechmann, Florian, 96215 Lichtenfels (DE); Döhler, Tim, 96269 Großheirath (DE)
(74) Vertreter: Hafner & Kohl PartmbB

(57) **Zusammenfassung**

Anordnung (17) und Verfahren zum zumindest teilweisen Inertisieren eines Gasstroms (7) durch wenigstens eine Abtrennvorrichtung (1), die zur Abtrennung von partikulären Baumaterialbestandteilen aus dem Gasstrom (7) vorgesehen ist, der partikuläres Baumaterial enthält, das bei der additiven Herstellung von dreidimensionalen Objekten (4) durch sukzessives selektives Belichten und somit Verfestigen einzelner Baumaterialschichten eines Baumaterials (5) prozessbedingt entsteht, das mittels eines Energiestrahls (6) verfestigt werden kann, und/oder die wenigstens eine Abtrennvorrichtung (1), die zur Reduzierung eines Feuchtigkeitsgehalts des Gasstroms (7) vorgesehen ist, wobei wenigstens eine erste Abtrennvorrichtung (1a) vorgesehen ist die eine erste Gehäusestruktur (8), wenigstens eine erste Filtereinrichtung und wenigstens eine erste Trocknungseinrichtung (14), umfasst; und wenigstens eine zweite Abtrennvorrichtung (1b) vorgesehen ist, die wenigstens ein zweites Trocknungselement (15) umfasst.

## Beschreibung

Die Erfindung betrifft eine Abtrennvorrichtung, welche zur Abtrennung von partikulären Baumaterialbestandteilen aus einem in einer Prozesskammer einer Vorrichtung zur additiven Herstellung dreidimensionaler Objekte durch sukzessives selektives Belichten und damit einhergehendes Verfestigen einzelner Baumaterialschichten aus einem verfestigbaren Baumaterial vermittels eines Energiestrahls prozessbedingt entstehenden, partikuläre Baumaterialbestandteile enthaltenden Gasstrom, eingerichtet ist.

Derartige Abtrennvorrichtungen sind an und für sich bekannt. Entsprechende Abtrennvorrichtungen dienen der Abtrennung von partikulären Baumaterialbestandteilen aus einem in einer Prozesskammer einer Vorrichtung zur additiven Herstellung dreidimensionaler Objekte prozessbedingt entstehenden, partikuläre Baumaterialbestandteile enthaltenden Gasstrom. Typischerweise beinhaltet der Gasstrom sich prozessbedingt aus der Bauebene gelöstes, nicht verfestigtes Baumaterial.

Wenngleich die Abtrennung entsprechender partikulärer Baumaterialbestandteile aus entsprechenden Gasströmen bis dato zufriedenstellend gelöst ist, besteht bisweilen das Problem der Anreicherung von Feuchtigkeit, welche sich negativ auf den jeweiligen additiven Bauprozess und die damit additiv herstellbaren bzw. hergestellten dreidimensionalen Objekte auswirkt.

Bisherige Ansätze zur Verringerung des Feuchtigkeitsanteils sehen eine gezielte Temperierung entsprechender Abtrennvorrichtungen vor deren Verwendung in einem additiven Herstellungsprozess vor. Diese Ansätze sind, z. B. weil nicht "in-situ" durchführbar, ineffizient und mit einem hohen anlagentechnischen Aufwand verbunden, als gesonderte Temperiereinrichtungen bzw. -öfen zur Temperierung entsprechender Abtrennvorrichtungen vorzusehen sind.

Bekannte Abtrennvorrichtungen sind demnach in ihrem Funktionsumfang auf die Abtrennung entsprechender partikulärer Baumaterialbestandteile beschränkt und sind darüber hinaus mit keiner weiteren Funktionalität, z. B. im Hinblick auf eine Reduzierung eines Feuchtigkeitsanteils bzw. eine vor Inbetriebnahme im Rahmen eines additiven Bauprozesses vorbereitende Inertisierung, ausgestattet.

Der Erfindung liegt damit die Aufgabe zugrunde, eine demgegenüber, insbesondere im Hinblick auf einen erweiterten Funktionsumfang, verbesserte Abtrennvorrichtung anzugeben.

Die Aufgabe wird insbesondere durch eine Abtrennvorrichtung gemäß Anspruch 1 gelöst. Die hierzu abhängigen Ansprüche betreffen mögliche Ausführungsformen der Abtrennvorrichtung. Die Aufgabe wird ferner durch eine Anordnung gemäß Anspruch 8 gelöst. Die hierzu abhängigen Ansprüche betreffen mögliche Ausführungsformen der Anordnung.

Die hierin beschriebene Abtrennvorrichtung ist grundsätzlich zur Abtrennung von partikulären Baumaterialbestandteilen aus einem in einer Prozesskammer einer Vorrichtung zur additiven Herstellung dreidimensionaler Objekte durch sukzessives selektives Belichten und damit einhergehendes Verfestigen einzelner Baumaterialschichten aus einem verfestigbaren Baumaterial vermittels eines Energiestrahls prozessbedingt entstehenden, partikuläre Baumaterialbestandteile enthaltenden, typischerweise inerten, Gasstrom, eingerichtet. Wie sich im Weiteren ergibt, kann die Abtrennung der partikulären Baumaterialbestandteile aus dem Gasstrom auch als Filterung der partikulären Baumaterialbestandteile aus dem Gasstrom, kurz als Filterung des Gasstroms, bezeichnet bzw. erachtet werden; die Abtrennvorrichtung kann insofern auch als Filtervorrichtung bezeichnet bzw. erachtet werden.

Eine wesentliche funktionsmäßige Bestimmung (Funktionalität) der Abtrennvorrichtung besteht sonach in der Abtrennung von partikulären Baumaterialbestandteilen aus entsprechenden partikuläre Baumaterialbestandteile enthaltenden Gasströmen. Bei den abzutrennenden Baumaterialbestandteilen handelt es sich typischerweise um im Rahmen additiver Bauprozesse nicht verfestigte Baumaterialpartikel, d. h. insbesondere so genannte "Schweiß- oder Sinterspritzer", welche sich prozessbedingt aus der Bauebene lösen.

Die Abtrennvorrichtung umfasst eine einen zumindest abschnittsweise von einem entsprechenden Gasstrom durchströmbaren oder durchströmten Gehäuseinnenraum definierende Gehäusestruktur ("Gehäuse"). Das Gehäuse kann nach Außen abgeschlossen ausgeführt sein, sodass der Gehäuseinnenraum nach Außen abschließbar bzw. abgeschlossen werden kann, um ein Wechselwirken der Atmosphäre innerhalb des Gehäuses mit einer das Gehäuse umgebenden, regelmäßig nicht inerten, Atmosphäre auszuschließen. Selbstverständlich kann das Gehäuse mit geeigneten Zugangsmöglichkeiten, d. h. z. B. Klappenelementen, versehen sein, welche einem Benutzer bedarfsweise eine Zugangsmöglichkeit in den Gehäuseinnenraum ermöglichen.

In dem Gehäuseinnenraum ist wenigstens eine Filtereinrichtung angeordnet oder ausgebildet. Die Filtereinrichtung umfasst wenigstens ein Filterelement zur Abtrennung der partikulären Baumaterialbestandteile aus einem entsprechenden Gasstrom. Das Filterelement weist vorzugsweise eine trommelartige geometrisch-konstruktive Gestalt auf ("Trommelfilter"), da diese eine hohe spezifische Filter(ober)fläche und somit einen hohen Filterwirkungsgrad aufweist. Die konkrete chemisch-physikalische Ausgestaltung des Filterelements ist im Hinblick auf die konkret aus dem Gasstrom abzutrennenden Baumaterialpartikel, d. h. insbesondere deren chemisch-physikalische Eigenschaften, festzulegen.

Neben der Abtrennung von in entsprechenden Gasströmen enthaltenen partikulären Baumaterialbestandteilen besteht eine weitere funktionsmäßige Bestimmung (Funktionalität) der Abtrennvorrichtung in der Trocknung entsprechender Gasströme. Unter einer Trocknung eines Gasstroms ist insbesondere die Reduzierung eines etwaigen Feuchtigkeitsanteils des Gasstroms zu verstehen. Mit der Reduzierung des Feuchtigkeitsanteils geht typischerweise auch eine Reduzierung des Anteils etwaig vorhandener reaktiver Gase, d. h. insbesondere Sauerstoff, einher.

Hierfür umfasst die Abtrennvorrichtung wenigstens eine Trocknungseinrichtung. Die Trocknungseinrichtung umfasst wenigstens ein Trocknungselement zur Trocknung eines entsprechenden Gasstroms. Das Trocknungselement kann als (lose) Pulverschüttung eines geeigneten Trocknungsmaterials vorliegen, da diese eine hohe spezifische Trocknungs(ober)fläche und somit einen hohen Trocknungswirkungsgrad aufweist. Die Trocknungseinrichtung bzw. das Trocknungselement ist dem Filterelement typischerweise nachgeschaltet, d. h. gasstromabwärts zu dem Filterelement angeordnet oder ausgebildet. Die Trocknungseinrichtung kann gegebenenfalls mehrere, gegebenenfalls unterschiedliche Trocknungselemente umfassen, welche als Wechselelemente mit der Trocknungseinrichtung (beschädigungs- bzw. zerstörungsfrei) lösbar mit der Trocknungseinrichtung verbindbar bzw. verbunden sind.

Grundsätzlich kann die Trocknungseinrichtung innerhalb oder außerhalb des durch das Gehäuse definierten Gehäuseinnenraums angeordnet oder ausgebildet sein.

In der ersten Variante kann die oder eine Trocknungseinrichtung insbesondere an einem mit dem Gehäuse (beschädigungs- bzw. zerstörungsfrei) lösbar verbindbaren, insbesondere der Filtereinrichtung nachgeschaltet angeordneten oder ausgebildeten, Einsatzbauteil angeordnet oder ausgebildet sein. Das Einsatzbauteil kann den Gehäuseinnenraum in einen oberhalb des Einsatzbauteils befindlichen oberen Gehäuseinnenraumbereich und in einen unterhalb des Einsatzbauteils befindlichen unteren Gehäuseinnenraumbereich unterteilen. Das Einsatzbauteil kann wenigstens eine von dem Gasstrom durchströmbare Strömungsöffnung aufweisen. Das Trocknungselement kann im Bereich der Strömungsöffnung, d. h. insbesondere ober- und/oder unterhalb der Strömungsöffnung, angeordnet oder ausgebildet sein. Die erste Variante ermöglicht eine äußerst kompakte Integration der Trocknungseinrichtung in die Abtrennvorrichtung.

In der zweiten Variante kann die oder eine Trocknungseinrichtung an oder in einem an dem Gehäuse gasstromaufwärts oder gasstromabwärts ankoppelbaren oder angekoppelten, insbesondere rohrförmigen, Leitungselement angeordnet oder ausgebildet sein. Das Trocknungselement kann an oder in einem von dem Gasstrom durchströmbaren, insbesondere rohrförmigen, Leitungselementabschnitts angeordnet oder ausgebildet sein.

Das Trocknungselement kann z. B. als ein adsorptives Trocknungselement, welches zur Adsorption von Feuchtigkeit eingerichtet ist, ausgebildet sein oder wenigstens ein solches umfassen. Das adsorptive Trocknungselement ermöglicht eine Absorption von in dem Gasstrom enthaltener Feuchtigkeit. Bei dem Trocknungselement kann es sich z. B. um ein Molekularsieb, welches eine adsorptive Anbindung bzw. Bindung von Wassermolekülen ermöglicht, handeln. Als eigentliches Trocknungsmaterial kann das Trocknungselement z. B. Alumosilikat (Zeolith) umfassen. Das Trocknungsmaterial kann als (lose) Pulverschüttung vorliegen. Die Porenweite eines entsprechenden Trocknungsmaterials ist zweckmäßig im Hinblick auf die Größe von Wassermolekülen gewählt und kann z. B. in einem Bereich zwischen 0,3 und 1 nm liegen. Grundsätzlich kann ein adsorptives Trocknungselement jedoch durch jedwedes Material bzw. jedwede Materialstruktur, welche aufgrund ihrer chemisch-physikalischen Eigenschaften zur adsorptiven Anbindung von Wassermolekülen eingerichtet ist, handeln. Neben den genannten Zeolithen kommt z. B. auch aktivierte Tonerde oder Silikagel in Betracht.

In allen Fällen strömt der Gasstrom zweckmäßig mit einer vergleichsweise geringen Strömungsgeschwindigkeit, d. h. insbesondere einer Strömungsgeschwindigkeit von weniger als 3 m/s. Geringe Strömungsgeschwindigkeiten verbessern, insbesondere aufgrund einer jeweils höheren Verweil- bzw. Wechselwirkungszeit, sowohl das mit der Filtereinrichtung erzielbare Abtrennungs- als auch das mit der Trocknungseinrichtung erzielbare Trocknungsergebnis.

Die Erfindung betrifft weiterhin eine Anordnung zur wenigstens teilweisen Inertisierung eines zu inertisierenden, durch eine Gehäusestruktur definierten Gehäuseinnenraums einer Abtrennvorrichtung zur Abtrennung von partikulären Baumaterialbestandteilen aus einem in einer Prozesskammer einer Vorrichtung zur additiven Herstellung dreidimensionaler Objekte durch sukzessives selektives Belichten und damit einhergehendes Verfestigen einzelner Baumaterialschichten aus einem verfestigbaren Baumaterial vermittels eines Energiestrahls prozessbedingt entstehenden, partikuläre Baumaterialbestandteile enthaltenden, inerten, d. h. der Inertisierung dienenden, Gasstrom. Die Anordnung umfasst wenigstens eine einen zu inertisierenden, durch eine Gehäusestruktur definierten Gehäuseinnenraum aufweisende erste Abtrennvorrichtung und wenigstens eine der wenigstens einen ersten Abtrennvorrichtung nachgeschaltete, wenigstens eine Trocknungseinrichtung, welche wenigstens ein Trocknungselement zur Trocknung des Gasstroms umfasst, umfassende zweite Abtrennvorrichtung. Die wenigstens eine erste Abtrennvorrichtung und die wenigstens eine zweite Abtrennvorrichtung sind durch eine von einem inerten Gasstrom durchströmbare bzw. durchströme Leitungsstruktur miteinander verbunden. Die zweite Abtrennvorrichtung kann optional eine Filtereinrichtung umfassen. Bei der zweiten Abtrennvorrichtung kann es sich demnach insbesondere um eine wie beschriebene Abtrennvorrichtung handeln. Eine wie beschriebene Abtrennvorrichtung kann sonach im Rahmen der im Weiteren näher beschriebenen Anordnung eingesetzt werden. Insoweit gelten die Ausführungen im Zusammenhang mit der weiter oben beschriebenen Abtrennvorrichtung analog für die Anordnung.

Die anordnungsgemäße Nachschaltung einer entsprechenden zweiten Abtrennvorrichtung ermöglicht eine vor Inbetriebnahme im Rahmen eines additiven Bauprozesses vorbereitende Inertisierung ("Vorinertisierung") einer ersten Abtrennvorrichtung. Die Vorinertisierung kann wenigstens teilweise, d. h. es ist weiterhin ein gewisser Anteil an nicht inertem Gas, d. h. z. B. Sauerstoff, etc., in dem Gehäuseinnenraum vorhanden, oder vollständig, d. h. es ist kein Anteil an nicht inertem Gas in dem Gehäuseinnenraum vorhanden, erfolgen. In beiden Fällen ist eine (erhebliche) Reduzierung der Rüstzeiten einer im Rahmen eines additiven Bauprozesses einzusetzenden ersten Abtrennvorrichtung möglich. Selbstverständlich erfolgt neben der Inertisierung auch eine Trocknung, d. h. eine Reduzierung eines in den jeweiligen ersten Abtrennvorrichtungen gegebenenfalls enthaltenen Feuchtigkeitsgehalts.

Die Anordnung kann mehrere zu inertisierende erste Abtrennvorrichtungen umfassen. Die zu inertisierenden ersten Abtrennvorrichtungen sind typischerweise in Reihe geschaltet und bilden eine Gruppe zu inertisierender Abtrennvorrichtungen. Die wenigstens eine zweite Abtrennvorrichtung ist der Gruppe typischerweise (gasstromabwärts) nachgeschaltet. Der inerte Gasstrom durchströmt sonach zuerst die Gruppe und dann die zweite Abtrennvorrichtung. Eine für eine Ausbildung eines entsprechend strömenden Gasstroms sorgende Strömungserzeugungseinrichtung, d. h. z. B. eine Gebläseeinrichtung, ist der Gruppe damit typischerweise (gasstromaufwärts) vorgeschaltet. Aus der beschriebenen Anordnung ergibt sich, dass diejenige erste Abtrennvorrichtung der Gruppe, welche der zweiten Abtrennvorrichtung am nächsten angeordnet ist, typischerweise diejenige ist, welche am schnellsten (vor)inertisiert ist.

Die Leitungsstruktur kann einen geschlossenen Strömungskreislauf bilden, wobei die wenigstens eine erste Abtrennvorrichtung, gegebenenfalls eine entsprechende Gruppe erster Abtrennvorrichtungen, und die wenigstens eine zweite Abtrennvorrichtung in den geschlossenen Strömungskreislauf geschaltet sind. Der inerte Gasstrom durchströmt die Abtrennvorrichtungen sonach kreislaufartig, was eine besonders effiziente Inertisierung der ersten Abtrennvorrichtungen ermöglicht.

Die Anordnung kann wenigstens eine mit der Leitungsstruktur koppelbare oder gekoppelte Erfassungseinrichtung zur Erfassung einer den Feuchtigkeitsanteil bzw. - gehalt des durch die Leitungsstruktur strömenden Gasstroms beschreibenden Feuchtegehaltsinformation und/oder eine Erfassungseinrichtung zur Erfassung einer den Inertisierungsgrad des durch die Leitungsstruktur strömenden Gasstroms beschreibenden Inertisierungsgradinformation umfassen. Selbstverständlich können gesonderte Erfassungseinrichtungen zur Erfassung einer entsprechenden Feuchtegehaltsinformation und einer entsprechenden Inertisierungsgradinformation vorgesehen sein. Die Feuchtegehaltsinformation kann z. B. durch die Erfassung des Anteils von Wassermolekülen in dem Gasstrom ermittelt bzw. beschrieben werden. Die Feuchtegehaltsinformation liefert einen Anhaltspunkt über die Effizienz der Trocknungseinrichtung bzw. des Trocknungselements, welche(s) sonach bei Bedarf (frühzeitig) gewechselt werden kann. Die Inertisierungsgradinformation kann z. B. durch die Erfassung des Anteils reaktiver Gase, insbesondere Sauerstoff, oder durch den Anteil inerter Gase, insbesondere Argon oder Stickstoff, in dem Gasstrom ermittelt bzw. beschrieben werden. Die Erfassungseinrichtung ist jedenfalls mit geeigneten Erfassungselementen, d. h. insbesondere Sensorelementen, zur Erfassung des Anteils von Wassermolekülen bzw. zur Erfassung des Anteils reaktiver Gase in dem Gasstrom ausgestattet.

Die Anordnung kann ferner eine hard- und/oder softwaremäßig implementierte Steuereinrichtung zur Steuerung des Anteils inerter Gase in dem Gasstrom und eine mit einem Inertgasspeicher bzw. einer Inertgasquelle verbundene Inertgaszuführeinrichtung zur Zuführung von (zusätzlichem) Inertgas in die Leitungsstruktur umfassen. Die Steuereinrichtung ist typischerweise eingerichtet, den Betrieb der Inertgaszuführeinrichtung, insbesondere in Abhängigkeit einer Inertisierungsgradinformation, zu steuern. Die Zuführung von (zusätzlichem) Inertgas in die Leitungsstruktur erfolgt insbesondere dann, wenn der Anteil reaktiver Gase einen bestimmten Grenzwert überschreitet. Der mit der Zuführung von von (zusätzlichem) Inertgas in die Leitungsstruktur verbundene Druckanstieg wird über eine sich öffnende Ventileinrichtung, z. B. in Form eines Überdruckventils, ausgeglichen. Durch einen derart realisierten Druckausgleich entströmt Gas, welches selbstverständlich auch reaktive Gasbestandteile enthält, aus der Leitungsstruktur, wodurch eine sukzessive Reduzierung des Anteils reaktiver Gase erfolgt.

Neben der Abtrennvorrichtung und der Anordnung betrifft die Erfindung auch eine Vorrichtung ("Vorrichtung") zur additiven Herstellung dreidimensionaler Objekte, d. h. beispielsweise technischer Bauteile bzw. technischer Bauteilgruppen, durch sukzessives selektives Belichten und damit einhergehendes Verfestigen einzelner Baumaterialschichten aus einem verfestigbaren Baumaterial vermittels eines Energiestrahls. Bei dem Energiestrahl kann es sich insbesondere um einen Laserstrahl handeln. Bei der Vorrichtung kann es sich um eine SLM-Vorrichtung, d. h. um eine Vorrichtung zur Durchführung selektiver Laserschmelzverfahren (SLM-Verfahren) oder um eine SLS-Vorrichtung, d. h. um eine Vorrichtung zur Durchführung selektiver Lasersinterverfahren (SLS-Verfahren), handeln. Die selektive Verfestigung jeweiliger zu verfestigender Baumaterialschicht erfolgt auf Grundlage von objektbezogenen Baudaten. Entsprechende Baudaten beschreiben im Allgemeinen die geometrische bzw. geometrisch-konstruktive Gestalt des jeweils additiv herzustellenden dreidimensionalen Objekts. Entsprechende Baudaten können beispielsweise "geslicte" CAD-Daten des herzustellenden Objekts beinhalten.

Die Vorrichtung umfasst die zur Durchführung additiver Bauprozesse typischerweise erforderlichen Funktionskomponenten, d. h. insbesondere eine Energiestrahlerzeugungseinrichtung zur Erzeugung eines Energiestrahls, insbesondere eines Laserstrahls, zur sukzessiven schichtweisen selektiven Verfestigung einzelner Baumaterialschichten aus einem Baumaterial, d. h. insbesondere einem partikulären bzw. pulverförmigen Metall-, Kunststoff- und/oder Keramikmaterial, und eine Beschichtereinrichtung zur Ausbildung zu verfestigender Baumaterialschichten in einer Bauebene. Bei einer Bauebene kann es sich um eine Oberfläche eines, typischerweise (in vertikaler Richtung) bewegbar gelagerten, Trägerelements einer Trägereinrichtung oder um eine Baumaterialschicht handeln. Im Allgemeinen ist in einer Bauebene wenigstens eine selektiv zu verfestigende bzw. selektiv verfestigte Baumaterialschicht ausgebildet.

Die Vorrichtung umfasst ferner wenigstens eine wie weiter oben beschriebene Abtrennvorrichtung. Die Abtrennvorrichtung ermöglicht in-situ sowohl eine Abtrennung entsprechender partikulärer Baumaterialbestandeile aus einem entsprechenden Gasstrom als auch eine Trocknung des Gasstroms. Die Trocknung reduziert bzw. verhindert die Anreicherung von Feuchtigkeit, welche sich negativ auf den jeweiligen additiven Bauprozess und die damit additiv herstellbaren bzw. hergestellten dreidimensionalen Objekte auswirkt. Sämtliche Ausführungen im Zusammenhang mit der Abtrennvorrichtung gelten analog für die Vorrichtung.

Die Erfindung wird im Weiteren anhand der Beschreibung der in den Zeichnungen dargestellten Ausführungsbeispiele nochmals erläutert. Dabei zeigt:
- Fig. 1: eine Prinzipdarstellung einer Abtrennvorrichtung gemäß einem Ausführungsbeispiel;
- Fig. 2: eine Prinzipdarstellung einer Anordnung gemäß einem Ausführungsbeispiel; und
- Fig. 3: eine Prinzipdarstellung einer Vorrichtung gemäß einem Ausführungsbeispiel.

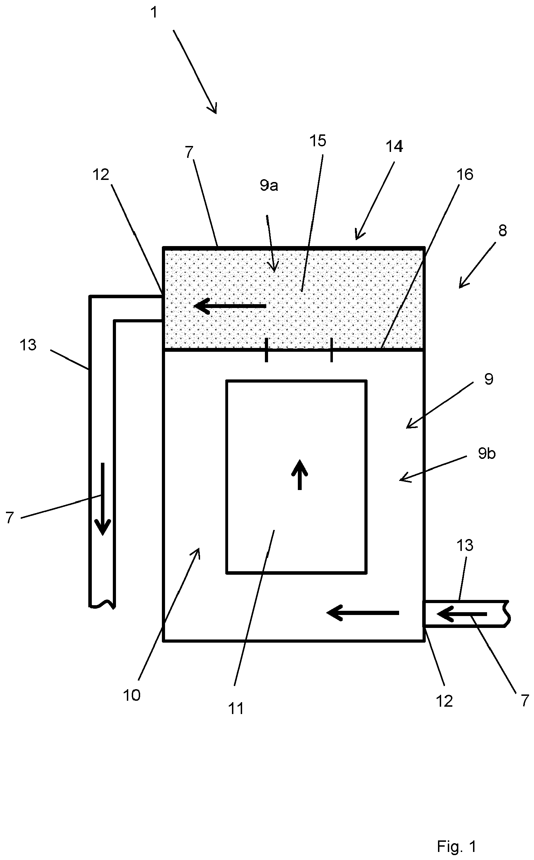

Fig. 1 zeigt eine Prinzipdarstellung einer Abtrennvorrichtung 1 gemäß einem Ausführungsbeispiel.

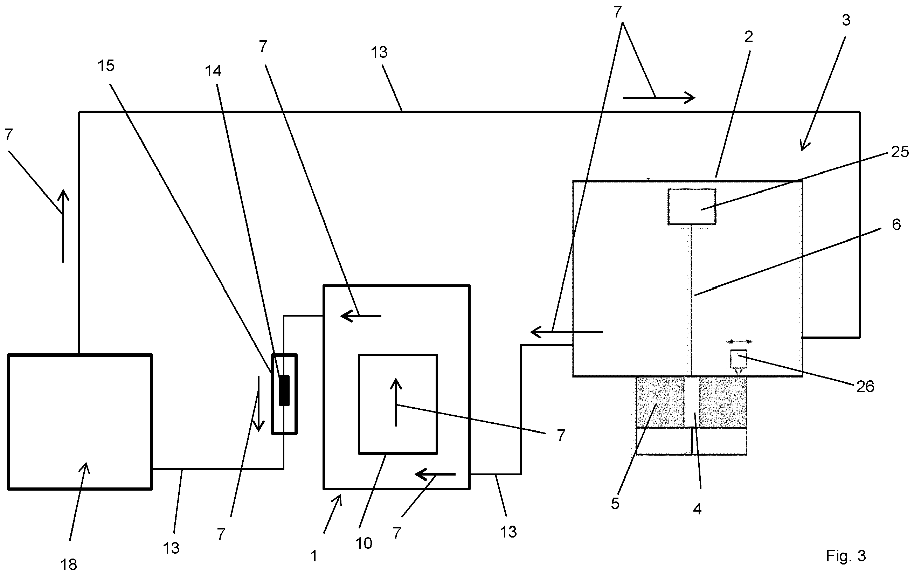

Die Abtrennvorrichtung 1 ist zur Abtrennung von partikulären Baumaterialbestandteilen aus einem in einer Prozesskammer 2 einer Vorrichtung 3 (vgl. Fig. 3) zur additiven Herstellung dreidimensionaler Objekte 4 durch sukzessives selektives Belichten und damit einhergehendes Verfestigen einzelner Baumaterialschichten aus einem verfestigbaren Baumaterial 5 vermittels eines Energiestrahls 6 prozessbedingt entstehenden, partikuläre Baumaterialbestandteile enthaltenden, typischerweise inerten, Gasstrom 7, eingerichtet. Ein weiteres Ausführungsbeispiel einer Abtrennvorrichtung 1 ist im Verbund mit einer entsprechenden Vorrichtung 3 in Fig. 3, welche eine Prinzipdarstellung einer Vorrichtung 3 gemäß einem Ausführungsbeispiel zeigt, dargestellt.

Eine erste funktionsmäßige Bestimmung (Funktionalität) der Abtrennvorrichtung 1 besteht in der Abtrennung von partikulären Baumaterialbestandteilen aus entsprechenden partikuläre Baumaterialbestandteile enthaltenden Gasströmen 7. Bei den abzutrennenden Baumaterialbestandteilen handelt es sich typischerweise um im Rahmen additiver Bauprozesse nicht verfestigte Baumaterialpartikel, d. h. insbesondere so genannte "Schweiß- oder Sinterspritzer", welche sich prozessbedingt aus der Bauebene lösen.

Die Abtrennvorrichtung 1 umfasst eine Gehäusestruktur 8 ("Gehäuse"). Das Gehäuse 8 definiert einen von einem entsprechenden Gasstrom 7 durchströmbaren bzw. durchströmten Gehäuseinnenraum 9. Ersichtlich ist das Gehäuse 8 mit Anschlussmöglichkeiten 12, insbesondere Flanschabschnitten, zum Anschluss jeweiliger eine Zu- bzw. Abführung eines entsprechenden Gasstroms 7 ermöglichender, insbesondere rohrförmiger, Leitungselemente 13 versehen. Aus der Anordnung der Anschlussmöglichkeiten 12 gemäß Fig. 1 ergibt sich, dass der Gasstrom 7 den Gehäuseinnenraum 9 in dem Ausführungsbeispiel von unten nach oben durchströmt.

Das Gehäuse 8 kann nach Außen abgeschlossen ausgeführt sein, sodass der Gehäuseinnenraum 9 nach Außen abschließbar bzw. abgeschlossen werden kann, um ein Wechselwirken der Atmosphäre innerhalb des Gehäuses 8 mit einer das Gehäuse 8 umgebenden, regelmäßig nicht inerten, Atmosphäre auszuschließen. Das Gehäuse 8 kann mit geeigneten Zugangsmöglichkeiten (nicht gezeigt), d. h. z. B. Klappenelementen, versehen sein, welche einem Benutzer bedarfsweise eine Zugangsmöglichkeit in den Gehäuseinnenraum 9 ermöglichen.

In dem Gehäuseinnenraum 9 ist eine Filtereinrichtung 10 angeordnet. Die Filtereinrichtung 10 umfasst ein Filterelement 11 zur Abtrennung der partikulären Baumaterialbestandteile aus einem entsprechenden, den Gehäuseinnenraum 9 durchströmenden Gasstrom 7. Das Filterelement 11 kann eine trommelartige geometrisch-konstruktive Gestalt aufweisen ("Trommelfilter"), welche eine hohe spezifische Filter(ober)fläche und somit einen hohen Filterwirkungsgrad aufweist. Die konkrete chemisch-physikalische Ausgestaltung des Filterelements 11 ist im Hinblick auf die konkret aus dem Gasstrom 7 abzutrennenden Baumaterialpartikel, d. h. insbesondere deren chemisch-physikalische Eigenschaften, festzulegen.

Die Abtrennvorrichtung 1 umfasst weiterhin eine Trocknungseinrichtung 14. Die Trocknungseinrichtung 14 umfasst ein Trocknungselement 15 zur Trocknung eines entsprechenden Gasstroms 7. Das Trocknungselement 15 liegt in dem gezeigten Ausführungsbeispiel als (lose) Pulverschüttung aus einem geeigneten Trocknungsmaterial vor welche eine hohe spezifische Trocknungs(ober)fläche und somit einen hohen Trocknungswirkungsgrad aufweist. Die Trocknungseinrichtung 14 bzw. das Trocknungselement 15 ist dem Filterelement 11 nachgeschaltet, d. h. gasstromabwärts zu dem Filterelement 11 angeordnet.

Neben der Abtrennung von in entsprechenden Gasströmen 7 enthaltenen partikulären Baumaterialbestandteilen besteht eine zweite funktionsmäßige Bestimmung (Funktionalität) der Abtrennvorrichtung 1 demnach in der Trocknung entsprechender Gasströme 7. Unter einer Trocknung eines Gasstroms 7 ist insbesondere die Reduzierung eines etwaigen Feuchtigkeitsanteils des Gasstroms 7 zu verstehen. Mit der Reduzierung des Feuchtigkeitsanteils geht typischerweise auch eine Reduzierung des Anteils etwaig vorhandener reaktiver Gase, d. h. insbesondere Sauerstoff, einher.

Die Trocknungseinrichtung 14 kann grundsätzlich innerhalb oder außerhalb des Gehäuseinnenraums 9 angeordnet oder ausgebildet sein. In dem Ausführungsbeispiel gemäß Fig. 1 ist die Trocknungseinrichtung 14 innerhalb des Gehäuseinnenraums 9 angeordnet. Die Trocknungseinrichtung 14 ist oberhalb eines mit dem Gehäuse 8 (beschädigungs- bzw. zerstörungsfrei) lösbar verbindbaren bzw. verbundenen, der Filtereinrichtung 10 nachgeschaltet angeordneten Einsatzbauteil 16 angeordnet. Das Einsatzbauteil 16 unterteilt den Gehäuseinnenraum 9 in einen oberhalb des Einsatzbauteils 16 befindlichen oberen Gehäuseinnenraumbereich 9a und in einen unterhalb des Einsatzbauteils 16 befindlichen unteren Gehäuseinnenraumbereich 9b. Das Einsatzbauteil 16 weist eine von dem Gasstrom 7 durchströmbare, hier zentrale, Strömungsöffnung (nicht näher bezeichnet) auf. Das Trocknungselement 15 ist in dem oberen Gehäuseinnenraumbereich 9a angeordnet und füllt diesen wenigstens teilweise, gegebenenfalls vollständig, aus.

Der Gasstrom 7 strömt zweckmäßig mit einer vergleichsweise geringen Strömungsgeschwindigkeit, d. h. insbesondere einer Strömungsgeschwindigkeit von weniger als 3 m/s, insbesondere weniger als 1 m/s. Derart geringe Strömungsgeschwindigkeiten verbessern aufgrund einer jeweils höheren Verweil- bzw. Wechselwirkungszeit, sowohl das mit der Filtereinrichtung 10 erzielbare Abtrennungsals auch das mit der Trocknungseinrichtung 14 erzielbare Trocknungsergebnis.

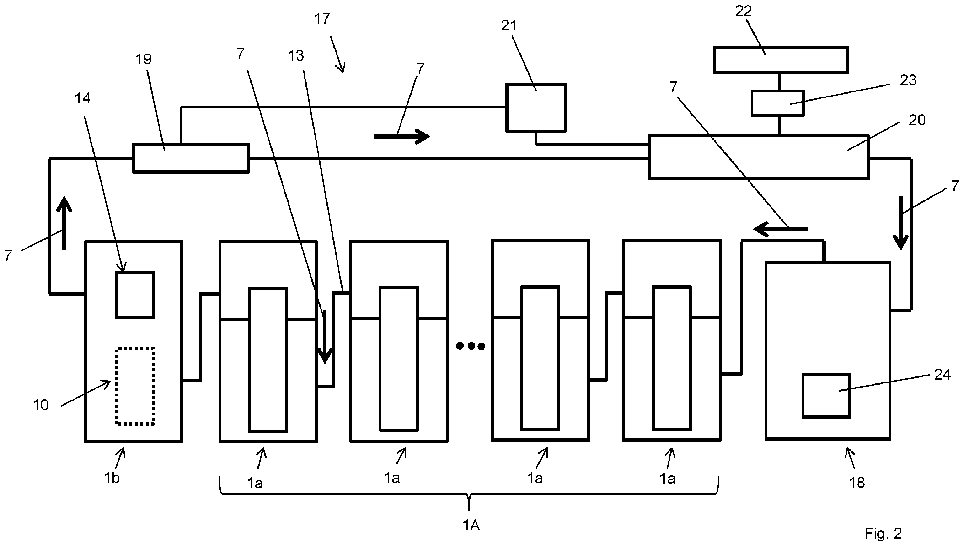

In Fig. 2 ist eine Prinzipdarstellung einer Anordnung 17 gemäß einem Ausführungsbeispiel gezeigt.

Die Anordnung 17 ist zur Inertisierung bzw. Vorinertisierung eines zu inertisierenden, durch ein Gehäuse 8 definierten Gehäuseinnenraums 9 einer Abtrennvorrichtung 1 zur Abtrennung von partikulären Baumaterialbestandteilen aus einem in einer Prozesskammer einer Vorrichtung 3 zur additiven Herstellung dreidimensionaler Objekte 4 durch sukzessives selektives Belichten und damit einhergehendes Verfestigen einzelner Baumaterialschichten aus einem verfestigbaren Baumaterial vermittels eines Energiestrahls 6 prozessbedingt entstehenden, partikuläre Baumaterialbestandteile enthaltenden, inerten Gasstrom 7 eingerichtet. Bei dem inerten Gasstrom 7 kann es sich z. B. um einen Argon- oder Stickstoffgasstrom handeln.

Die Anordnung 17 umfasst mehrere, jeweils einen zu inertisierenden, durch ein Gehäuse 8 definierten Gehäuseinnenraum 9 aufweisende erste Abtrennvorrichtungen 1a und eine den ersten Abtrennvorrichtungen 1a nachgeschaltete, eine Trocknungseinrichtung 14, welche ein Trocknungselement 15 zur Trocknung des Gasstroms 7 umfasst, umfassende zweite Abtrennvorrichtung 1b. Die weitere Abtrennvorrichtung 1b kann, wie durch die Strichlierung angedeutet, optional eine Filtereinrichtung 10 umfassen. Die ersten Abtrennvorrichtungen 1a und die zweite Abtrennvorrichtung 1b sind durch eine von einem inerten, d. h. der Inertisierung dienenden, Gasstrom 7 durchströmbare bzw. durchströme Leitungsstruktur 13 miteinander verbunden. Bei der zweiten Abtrennvorrichtung 1b handelt es sich insbesondere um eine Abtrennvorrichtung 1 gemäß dem in Fig. 1 gezeigten Ausführungsbeispiel.

Die anordnungsgemäße Nachschaltung einer entsprechenden zweiten Abtrennvorrichtung 1b ermöglicht eine vor Inbetriebnahme im Rahmen eines additiven Bauprozesses vorbereitende Inertisierung ("Vorinertisierung") jeweiliger erster Abtrennvorrichtungen 1a. Die Vorinertisierung kann wenigstens teilweise, d. h. es ist weiterhin ein gewisser Anteil an nicht inertem Gas, d. h. z. B. Sauerstoff, in dem Gehäuseinnenraum vorhanden, oder vollständig, d. h. es ist kein Anteil an nicht inertem Gas in dem Gehäuseinnenraum vorhanden, erfolgen. In allen Fällen ist eine (erhebliche) Reduzierung der Rüstzeiten einer im Rahmen eines additiven Bauprozesses einzusetzenden ersten Abtrennvorrichtung 1a möglich. Selbstverständlich erfolgt neben der Inertisierung auch eine Trocknung, d. h. eine Reduzierung eines in den jeweiligen ersten Abtrennvorrichtungen 1a gegebenenfalls enthaltenen Feuchtigkeitsgehalts.

Die Leitungsstruktur 13 bildet einen geschlossenen Strömungskreislauf, in welchen die ersten Abtrennvorrichtungen 1a und die zweite Abtrennvorrichtung 1b geschaltet sind. Der inerte Gasstrom 7 durchströmt die Abtrennvorrichtungen 1a, 1b sonach kreislaufartig, was eine besonders effiziente Inertisierung der ersten Abtrennvorrichtungen 1a ermöglicht.

Die zu inertisierenden ersten Abtrennvorrichtungen 1a sind in Reihe geschaltet und bilden eine Gruppe 1A zu inertisierender Abtrennvorrichtungen 1a. Die zweite Abtrennvorrichtung 1b ist der Gruppe 1A (gasstromabwärts) nachgeschaltet. Der inerte Gasstrom 7 durchströmt sonach zuerst die Gruppe 1A und dann die zweite Abtrennvorrichtung 1b. Eine für eine Ausbildung eines entsprechend strömenden inerten Gasstroms 7 sorgende Strömungserzeugungseinrichtung 18, d. h. z. B. eine Gebläseeinrichtung, ist der Gruppe 1A (gasstromaufwärts) vorgeschaltet. Aus der beschriebenen Anordnung ergibt sich, dass diejenige erste Abtrennvorrichtung 1a der Gruppe 1A, welche der zweiten Abtrennvorrichtung 1b am nächsten angeordnet ist, diejenige ist, welche am schnellsten (vor)inertisiert ist.

Die Anordnung 17 umfasst zudem eine mit der Leitungsstruktur 13 gekoppelte Erfassungseinrichtung 19 zur Erfassung einer den Feuchtigkeitsanteil bzw. -gehalt des durch die Leitungsstruktur 17 strömenden inerten Gasstroms 7 beschreibenden Feuchtegehaltsinformation und eine Erfassungseinrichtung 20 zur Erfassung einer den Inertisierungsgrad des durch die Leitungsstruktur 13 strömenden inerten Gasstroms 7 beschreibenden Inertisierungsgradinformation. Die Feuchtegehaltsinformation kann z. B. durch die Erfassung des Anteils von Wassermolekülen in dem inerten Gasstrom 7 ermittelt bzw. beschrieben werden. Die Feuchtegehaltsinformation liefert einen Anhaltspunkt über die Effizienz der Trocknungseinrichtung 14 bzw. des Trocknungselements 15, welche(s) sonach bei Bedarf (frühzeitig) gewechselt werden kann. Die Inertisierungsgradinformation kann z. B. durch die Erfassung des Anteils reaktiver Gase, insbesondere Sauerstoff, oder durch den Anteil inerter Gase, insbesondere Argon oder Stickstoff, in dem inerten Gasstrom 7 ermittelt bzw. beschrieben werden. Die jeweilige Erfassungseinrichtung 19, 20 ist mit geeigneten Erfassungselementen (nicht gezeigt), d. h. insbesondere Sensorelementen, zur Erfassung des Anteils von Feuchtigkeit, insbesondere des Anteils von Wassermolekülen, bzw. zur Erfassung des Anteils reaktiver Gase in dem inerten Gasstrom 7 ausgestattet.

Die Anordnung 17 umfasst ferner eine hard- und/oder softwaremäßig implementierte Steuereinrichtung 21 zur Steuerung des Anteils inerter Gase in dem inerten Gasstrom 7 und eine mit einem Inertgasspeicher 22 bzw. einer Inertgasquelle verbundene Inertgaszuführeinrichtung 23 zur Zuführung von (zusätzlichem) Inertgas in die Leitungsstruktur 13. Die Steuereinrichtung 21 ist eingerichtet, den Betrieb der Inertgaszuführeinrichtung 23, insbesondere in Abhängigkeit einer Inertisierungsgradinformation, zu steuern. Die Zuführung von (zusätzlichem) Inertgas in die Leitungsstruktur 13 erfolgt typischerweise dann, wenn der Anteil reaktiver Gase einen bestimmten Grenzwert, überschreitet. Für Sauerstoff gilt beispielsweise, dass der Grenzwert überschritten ist, wenn der Anteil an Sauerstoff zwei Vol.-% übersteigt. Der mit der Zuführung von (zusätzlichem) Inertgas in die Leitungsstruktur 13 verbundene Druckanstieg wird über eine sich gegebenenfalls öffnende Ventileinrichtung 24, z. B. in Form eines Überdruckventils, ausgeglichen. Die Ventileinrichtung 24 ist beispielhaft im Bereich der Strömungserzeugungseinrichtung 18 angeordnet. Durch einen derart realisierten Druckausgleich entströmt Gas, welches selbstverständlich auch reaktive Gasbestandteile enthält, aus der Leitungsstruktur 13, wodurch eine sukzessive Reduzierung des Anteils reaktiver Gase in dem Gasstrom 7 erfolgt.

Fig. 3 zeigt eine Prinzipdarstellung einer Vorrichtung 3 gemäß einem Ausführungsbeispiel. Wie weiter oben erwähnt, ist die Vorrichtung 3 in Fig. 3 im Verbund mit einer Abtrennvorrichtung 1 dargestellt.

Die Vorrichtung 3 dient der additiven Herstellung dreidimensionaler Objekte 4, d. h. beispielsweise technischer Bauteile bzw. technischer Bauteilgruppen, durch sukzessives selektives Belichten und damit einhergehendes Verfestigen einzelner Baumaterialschichten aus einem verfestigbaren Baumaterial 5 vermittels eines Energiestrahls 6. Bei dem Energiestrahl 6 handelt es sich um einen Laserstrahl. Bei der Vorrichtung 3 handelt kann es sich um eine SLM-Vorrichtung, d. h. um eine Vorrichtung zur Durchführung selektiver Laserschmelzverfahren (SLM-Verfahren). Die selektive Verfestigung jeweiliger zu verfestigender Baumaterialschichten erfolgt auf Grundlage von objektbezogenen Baudaten. Entsprechende Baudaten beschreiben im Allgemeinen die geometrische bzw. geometrisch-konstruktive Gestalt des jeweils additiv herzustellenden dreidimensionalen Objekts 4). Entsprechende Baudaten können beispielsweise "geslicte" CAD-Daten des herzustellenden Objekts 4 beinhalten.

Die Vorrichtung 3 umfasst die zur Durchführung additiver Bauprozesse erforderlichen Funktionskomponenten, d. h. insbesondere eine Energiestrahlerzeugungseinrichtung 25 zur Erzeugung des Energiestrahls 6 zur sukzessiven schichtweisen selektiven Verfestigung einzelner Baumaterialschichten aus dem Baumaterial 5, d. h. insbesondere einem partikulären bzw. pulverförmigen Metall, wie z. B. Aluminium, Edelstahl oder Titan, und eine, wie durch den horizontal ausgerichteten Doppelpfeil angedeutet, bewegbar gelagerten Beschichtereinrichtung 26 zur Ausbildung zu verfestigender Baumaterialschichten in einer Bauebene.

Die Vorrichtung 3 umfasst ferner wenigstens eine Abtrennvorrichtung 1. Die Abtrennvorrichtung 1 ermöglicht in-situ sowohl eine Abtrennung entsprechender partikulärer Baumaterialbestandeile aus einem entsprechenden aus der Prozesskammer 2 der Vorrichtung 3 strömenden Gasstrom 7 als auch eine Trocknung des Gasstroms 7. Die Trocknung reduziert bzw. verhindert die Anreicherung von Feuchtigkeit, welche sich negativ auf den jeweiligen additiven Bauprozess und die damit additiv herstellbaren bzw. hergestellten dreidimensionalen Objekte 4 auswirkt.

In dem Ausführungsbeispiel gemäß Fig. 3 ist die der Abtrennvorrichtung 1 zugehörige Trocknungseinrichtung 14 an bzw. in einem an das Gehäuse 8 gasstromabwärts angekoppelten, insbesondere rohrförmigen, Leitungselement 13 angeordnet. Das Trocknungselement 15 ist in einem von dem Gasstrom 7 durchströmbaren Leitungselementabschnitt angeordnet.

Bei dem Trocknungselement 15 handelt es sich bei den in den Fig. gezeigten Ausführungsbeispielen beispielhaft um ein adsorptives Trocknungselement 15. Das adsorptive Trocknungselement 15 ermöglicht eine Absorption von in dem Gasstrom 7 enthaltener Feuchtigkeit. Konkret kann es sich bei dem adsorptiven Trocknungselement 15 um ein Molekularsieb handeln, welches eine adsorptive Anbindung bzw. Bindung von Wassermolekülen ermöglicht. Als eigentliches Trocknungsmaterial kann das Trocknungselement 15 z. B. Alumosilikat (Zeolith) umfassen. Das Trocknungsmaterial kann, wie erwähnt, als (lose) Pulverschüttung vorliegen. Die Porenweite eines entsprechenden Trocknungsmaterials ist zweckmäßig im Hinblick auf die Größe von Wassermolekülen gewählt und kann z. B. in einem Bereich zwischen 0,3 und 1 nm liegen.

Verschiedene Aspekte und Ausführungsformen der Erfindung werden nachfolgend beschrieben:
1. Abtrennvorrichtung (1), welche zur Abtrennung von partikulären Baumaterialbestandteilen aus einem in einer Prozesskammer (2) einer Vorrichtung (3) zur additiven Herstellung dreidimensionaler Objekte (4) durch sukzessives selektives Belichten und damit einhergehendes Verfestigen einzelner Baumaterialschichten aus einem verfestigbaren Baumaterial (5) vermittels eines Energiestrahls (6) prozessbedingt entstehenden, partikuläre Baumaterialbestandteile enthaltenden Gasstrom (7), eingerichtet ist, **gekennzeichnet durch:**
   - eine einen zumindest abschnittsweise einem entsprechenden Gasstrom (7) durchströmbaren oder durchströmten Gehäuseinnenraum (9) definierende Gehäusestruktur (8),
   - wenigstens eine in dem Gehäuseinnenraum (9) angeordnete oder ausgebildete Filtereinrichtung (10), welche wenigstens ein Filterelement (11) zur Abtrennung der partikulären Baumaterialbestandteile aus einem entsprechenden Gasstrom (7) umfasst,
   - wenigstens eine Trocknungseinrichtung (14), welche wenigstens ein Trocknungselement (15) zur Trocknung des Gasstroms (7) umfasst.
2. Abtrennvorrichtung nach Ausführung 1, **dadurch gekennzeichnet, dass** die Trocknungseinrichtung (14) innerhalb des durch die Gehäusestruktur (8) definierten Gehäuseinnenraums (9 angeordnet oder ausgebildet ist.
3. Abtrennvorrichtung nach Ausführung 2, **dadurch gekennzeichnet, dass** die Trocknungseinrichtung (14) an einem mit der Gehäusestruktur (8) lösbar verbindbaren, insbesondere der Filtereinrichtung (10) nachgeschaltet angeordneten oder ausgebildeten, Einsatzbauteil (16) angeordnet oder ausgebildet ist, wobei das Einsatzbauteil (16) wenigstens eine von dem Gasstrom (7) durchströmbare Strömungsöffnung aufweist, und das Trocknungselement (15) im Bereich der Strömungsöffnung angeordnet oder ausgebildet ist.
4. Abtrennvorrichtung nach einer der vorhergehenden Ausführungen, **dadurch gekennzeichnet, dass** die oder eine weitere Trocknungseinrichtung (14) außerhalb des durch die Gehäusestruktur (8) definierten Gehäuseinnenraums (9) angeordnet oder ausgebildet ist.
5. Abtrennvorrichtung nach Ausführung 4, **dadurch gekennzeichnet, dass** die Trocknungseinrichtung (14) an oder in einem an die Gehäusestruktur (8) gasstromaufwärts oder gasstromabwärts ankoppelbaren oder angekoppelten, insbesondere rohrförmigen, Leitungselement (13) angeordnet oder ausgebildet ist, wobei das Trocknungselement (15) an oder in einem von dem Gasstrom (7) durchströmbaren, insbesondere rohrförmigen, Leitungselementabschnitts angeordnet oder ausgebildet ist.
6. Abtrennvorrichtung nach einer der vorhergehenden Ausführungen, **dadurch gekennzeichnet, dass** das Trocknungselement (15) als ein adsorptives Trocknungselement, insbesondere als Molekularsieb, welches zur Adsorption von Feuchtigkeit eingerichtet ist, ausgebildet ist oder wenigstens ein solches umfasst.
7. Vorrichtung (3) zur additiven Herstellung dreidimensionaler Objekte (4) durch sukzessives selektives Belichten und damit einhergehendes Verfestigen einzelner Baumaterialschichten aus einem verfestigbaren Baumaterial (5) vermittels eines Energiestrahls (6), umfassend wenigstens eine Abtrennvorrichtung (1) nach einem der vorhergehenden Ansprüche.
8. Anordnung (17) zur wenigstens teilweisen Inertisierung eines zu inertisierenden, durch eine Gehäusestruktur (8) definierten Gehäuseinnenraums (9) einer Abtrennvorrichtung (1b), welche zur Abtrennung von partikulären Baumaterialbestandteilen aus einem in einer Prozesskammer (2) einer Vorrichtung (3) zur additiven Herstellung dreidimensionaler Objekte (4) durch sukzessives selektives Belichten und damit einhergehendes Verfestigen einzelner Baumaterialschichten aus einem verfestigbaren Baumaterial (5) vermittels eines Energiestrahls (6) prozessbedingt entstehenden, partikuläre Baumaterialbestandteile enthaltenden Gasstrom, eingerichtet ist, umfassend:
   - wenigstens eine einen zu inertisierenden, durch eine Gehäusestruktur (8) definierten Gehäuseinnenraum (9) aufweisende erste Abtrennvorrichtung (1a),
   - wenigstens eine der wenigstens einen ersten Abtrennvorrichtung (1a) nachgeschaltete, wenigstens eine Trocknungseinrichtung (14), welche wenigstens ein Trocknungselement (15) zur Trocknung eines Gasstroms (7) umfasst, umfassende zweite Abtrennvorrichtung (1b), insbesondere eine Abtrennvorrichtung (1) nach einem der Ansprüche 1 bis 7,
   wobei die wenigstens eine erste Abtrennvorrichtung (1a) und die wenigstens eine zweite Abtrennvorrichtung (1b) durch eine von einem inerten Gasstrom (7) durchströmbare oder durchströme Leitungsstruktur (13) miteinander verbunden sind.
9. Anordnung nach Ausführung 8, **gekennzeichnet durch** mehrere zu inertisierende erste Abtrennvorrichtungen (1a), wobei die zu inertisierenden ersten Abtrennvorrichtungen (1a) in Reihe geschaltet sind und eine Gruppe (1A) zu inertisierender Abtrennvorrichtungen (1a) bilden, wobei die wenigstens eine zweite Abtrennvorrichtung (1b) der Gruppe (1A) gasstromabwärts nachgeschaltet ist.
10. Anordnung nach Ausführung 8 oder 9, **dadurch gekennzeichnet, dass** die Leitungsstruktur (13) einen geschlossenen Strömungskreislauf bildet, wobei die wenigstens eine erste Abtrennvorrichtung (1a) und die wenigstens eine zweite Abtrennvorrichtung (1b) in den geschlossenen Strömungskreislauf geschaltet sind.
11. Anordnung nach einer der Ausführungen 8 bis 10, **gekennzeichnet durch** eine mit der Leitungsstruktur (13) koppelbare oder gekoppelte Erfassungseinrichtung (19) zur Erfassung einer den Feuchtigkeitsgehalt des durch die Leitungsstruktur (13) strömenden inerten Gasstroms (7) beschreibenden Feuchtegehaltsinformation und/oder eine Erfassungseinrichtung (20) zur Erfassung einer den Inertisierungsgrad des durch die Leitungsstruktur (13) strömenden inerten Gasstroms (7) beschreibenden Inertisierungsgradinformation.
12. Anordnung nach einer der Ausführungen 8 bis 11, **gekennzeichnet durch** eine Steuereinrichtung (21) zur Steuerung des Anteils inerter Gase in dem inerten Gasstrom (7) und eine Inertgaszuführeinrichtung (23) zur Zuführung von Inertgas in die Leitungsstruktur (13), wobei die Steuereinrichtung (21) eingerichtet ist, den Betrieb der Inertgaszuführeinrichtung (23), insbesondere in Abhängigkeit einer Inertisierungsgradinformation, zu steuern.

## Patentansprüche

1. Anordnung (17) zum zumindest teilweisen Inertisieren eines Gasstroms (7) durch wenigstens eine Abtrennvorrichtung (1), die zur Abtrennung von partikulären Baumaterialbestandteilen aus dem Gasstrom (7) vorgesehen ist, der partikuläres Baumaterial enthält, das bei der additiven Herstellung von dreidimensionalen Objekten (4) durch sukzessives selektives Belichten und somit Verfestigen einzelner Baumaterialschichten eines Baumaterials (5) prozessbedingt entsteht, das mittels eines Energiestrahls (6) verfestigt werden kann, und/oder die wenigstens eine Abtrennvorrichtung (1), die zur Reduzierung eines Feuchtigkeitsgehalts des Gasstroms (7) vorgesehen ist, **dadurch gekennzeichnet ist, dass**
- wenigstens eine erste Abtrennvorrichtung (1a) vorgesehen ist, insbesondere mehrere in Reihe geschaltete erste Abtrennvorrichtungen (1a), wobei jeweils eine der wenigstens einen ersten Abtrennvorrichtung (1a) umfasst:
eine erste Gehäusestruktur (8), die einen ersten Gehäuseinnenraum (9) d efiniert, die von dem Gasstrom (7) zumindest abschnittsweise durchströmt oder durchströmbar ist,
wenigstens eine erste Filtereinrichtung (10), die in dem ersten Gehäuseinnenraum (9) angeordnet oder ausgebildet ist, wobei die wenigstens eine erste Filtereinrichtung (10) wenigstens ein erstes Filterelement (11) zur Abscheidung der partikelförmigen Baumaterialbestandteile aus dem Gasstrom (7) umfasst, und
wenigstens eine erste Trocknungseinrichtung (14), die wenigstens ein erstes Trocknungselement (15) zum Trocknen des Gasstroms (7) umfasst; und
wenigstens eine zweite Abtrennvorrichtung (1b), die der wenigstens einen ersten Abtrennvorrichtung (1a) nachgeschaltet ist, wobei die wenigstens eine zweite Abtrennvorrichtung (1b) umfasst:
wenigstens eine zweite Trocknungseinrichtung (14), die wenigstens ein zweites Trocknungselement (15) zum Trocknen des Gasstroms (7) umfasst.

2. Anordnung (17) nach Anspruch 1, **dadurch gekennzeichnet, dass** die wenigstens eine erste Trocknungseinrichtung (14) innerhalb des durch die erste Gehäusestruktur (8) definierten ersten Gehäuseinnenraums (9), insbesondere stromabwärts der wenigstens einen ersten Filtereinrichtung (10), angeordnet oder ausgebildet ist, wobei die wenigstens eine erste Trocknungseinrichtung (14) an einem mit der ersten Gehäusestruktur (8) lösbar verbundenen ersten Einsatzbauteil (16) angeordnet oder ausgebildet ist, wobei das erste Einsatzbauteil (16) wenigstens eine erste Strömungsöffnung aufweist, die von dem Gasstrom (7) zumindest abschnittsweise durchströmt wird oder werden kann.

3. Anordnung (17) nach Anspruch 1, **dadurch gekennzeichnet, dass** die oder eine andere wenigstens eine erste Trocknungseinrichtung (14) außerhalb des durch die erste Gehäusestruktur (8) definierten ersten Gehäuseinnenraums (9) angeordnet oder ausgebildet ist, wobei die oder eine andere wenigstens eine erste Trocknungseinrichtung (14) an oder in einem, insbesondere rohrförmigen, Leitungselement (13) angeordnet oder ausgebildet ist, das bezüglich des Gasstroms (7) stromaufwärts oder stromabwärts mit der ersten Gehäusestruktur (8) gekoppelt ist oder koppelbar ist, und wobei das oder ein anderes erstes Trocknungselement (15) an oder in einem, insbesondere rohrförmigen, Leitungselementabschnitt angeordnet oder ausgebildet ist, der von dem Gasstrom (7) zumindest abschnittsweise durchströmt oder durchströmbar ist.

4. Anordnung (17) nach einem der Ansprüche 1 bis 3, **dadurch gekennzeichnet, dass** die wenigstens eine zweite Abtrennvorrichtung (1b) umfasst:
eine zweite Gehäusestruktur (8), die einen zweiten Gehäuseinnenraum (9) definiert, die zumindest abschnittsweise von einem Gasstrom (7) durchströmt oder durchströmbar ist, und
wenigstens eine zweite Filtereinrichtung (10), die in dem zweiten Gehäuseinnenraum (9) angeordnet oder ausgebildet ist, wobei die wenigstens eine zweite Filtereinrichtung (10) wenigstens ein zweites Filterelement (11) zur Abtrennung der partikelförmigen Baumaterialbestandteile aus dem Gasstrom (7) aufweist.

5. Anordnung (17) nach einem der Ansprüche 1 bis 4, **dadurch gekennzeichnet, dass** die wenigstens eine zweite Trocknungseinrichtung (14) innerhalb des durch die zweite Gehäusestruktur (8) definierten zweiten Gehäuseinnenraums (9), insbesondere stromabwärts der wenigstens einen zweiten Filtereinrichtung (10), angeordnet oder ausgebildet ist, wobei die wenigstens eine zweite Trocknungseinrichtung (14) an einem zweiten Einsatzbauteil (16) angeordnet oder ausgebildet ist, das mit der zweiten Gehäusestruktur (8) abnehmbar verbunden ist, wobei das zweite Einsatzbauteil (16) wenigstens eine zweite Strömungsöffnung aufweist, die von dem Gasstrom (7) zumindest abschnittsweise durchströmt oder durchströmbar ist.

6. Anordnung (17) nach Anspruch 5, **dadurch gekennzeichnet, dass** die oder eine andere wenigstens eine zweite Trocknungseinrichtung (14) außerhalb des durch die zweite Gehäusestruktur (8) definierten zweiten Gehäuseinnenraums (9) angeordnet oder ausgebildet ist, wobei die oder eine andere wenigstens eine zweite Trocknungseinrichtung (14) an oder in einem, insbesondere rohrförmigen, Leitungselement (13) angeordnet oder ausgebildet ist, das bezüglich des Gasstroms (7) stromaufwärts oder stromabwärts mit der zweiten Gehäusestruktur (8) gekoppelt oder koppelbar ist, und wobei das oder ein anderes zweites Trocknungselement (15) an oder in einem, insbesondere rohrförmigen, Leitungselementabschnitt angeordnet oder ausgebildet ist, der von dem Gasstrom (7) zumindest abschnittsweise durchströmt oder durchströmbar ist.

7. Anordnung (17) nach einem der Ansprüche 1 bis 6, **dadurch gekennzeichnet, dass** das wenigstens eine erste Trocknungselement (15) und/oder das wenigstens eine zweite Trocknungselement (15) als ein adsorptives Trocknungselement, insbesondere ein Molekularsieb, ausgebildet ist oder wenigstens ein solches umfasst, das zur Adsorption von Feuchtigkeit vorgesehen ist.

8. Anordnung (17) nach einem der Ansprüche 1 bis 7, wobei die wenigstens eine zweite Abtrennvorrichtung (1b) mit wenigstens einer stromaufwärts angeordneten ersten Abtrennvorrichtung (1a) mittels einer Leitungsstruktur (13) verbunden ist, die von dem Gasstrom (7) zumindest abschnittsweise durchströmt oder durchströmbar ist.

9. Die Anordnung (17) nach einem der Ansprüche 1 bis 8, **gekennzeichnet durch** eine Leitungsstruktur (13), die einen stromabwärtigen Abschnitt der wenigstens einen zweiten Abtrennvorrichtung (1b) mit einem stromaufwärtigen Abschnitt der wenigstens einen ersten Abtrennvorrichtung (1a) verbindet.

10. Die Anordnung (17) nach einem der Ansprüche 1 bis 9, **gekennzeichnet durch**:
eine Feuchtigkeitserfassungsvorrichtung (19) zur Erfassung einer den Feuchtigkeitsgehalt des durch die Leitungsstruktur (13) strömenden inerten Gasstroms (7) beschreibenden Feuchtegehaltsinformation; und/oder eine Intertizationserkennungsvorrichtung (20) zur Erfassung einer den Inertisierungsgrad des durch die Leitungsstruktur (13) strömenden inerten Gasstroms (7) beschreibenden Inertisierungsgradinformation.

11. Die Anordnung (17) nach einem der Ansprüche 1 bis 10, **gekennzeichnet durch**:
eine Inertgaszuführeinrichtung (23) zur Zuführung von Inertgas in den Gasstrom (7); und
eine Steuereinrichtung (21) zur Steuerung eines Anteils inerter Gase in dem Gasstrom (7), die zumindest teilweise auf Informationen basiert, die einen Inertierungsgrad des Gasstroms (7) beschreiben.

12. Vorrichtung (3) zur additiven Herstellung dreidimensionaler Objekte
(4) durch sukzessive selektive Belichtung und damit Verfestigung einzelner Baumaterialschichten eines mittels eines Energiestrahls (6) verfestigbaren Baumaterials (5), wobei die Vorrichtung (3) wenigstens eine Anordnung (17) nach einem der Ansprüche 1-11 umfasst.

13. Verfahren zur zumindest teilweisen Inertisierung eines Gasstroms (7) durch wenigstens eine Abtrennvorrichtung (1), die zum Abtrennen von partikulären Baumaterialbestandteilen aus einem Gasstrom vorgesehen ist, der partikuläres Baumaterial enthält, das bei der additiven Herstellung von dreidimensionalen Objekten (4) durch sukzessives selektives Belichten und somit Verfestigen einzelner Baumaterialschichten eines Baumaterials (5) entsteht, das mittels eines Energiestrahls (6) verfestigt werden kann, und/oder die wenigstens eine Abtrennvorrichtung (1), die zur Reduzierung eines Feuchtigkeitsgehalts des Gasstroms (7) vorgesehen ist, **dadurch gekennzeichnet ist, dass**
der Gasstroms (7) durch wenigstens eine erste Abtrennvorrichtung (1a), insbesondere eine Vielzahl von in Reihe geschalteten ersten Abtrennvorrichtungen (1a) durchströmt wird, wobei jeweils eine der wenigstens einen ersten Abtrennvorrichtung (1a) umfasst:
eine erste Gehäusestruktur (8), die einen ersten Gehäuseinnenraum (9) definiert, durch den ein Gasstrom (7) zumindest abschnittsweise durchströmt wird,
wenigstens eine erste Filtereinrichtung (10), die in dem ersten Gehäuseinnenraum (9) angeordnet oder ausgebildet ist, wobei die wenigstens eine erste Filtereinrichtung (10) wenigstens ein erstes Filterelement (11) zur Abtrennung der partikelförmigen Baumaterialbestandteile aus dem Gasstrom (7) umfasst, und
wenigstens eine erste Trocknungseinrichtung (14), die wenigstens ein erstes Trocknungselement (15) zum Trocknen des Gasstroms (7) umfasst; und
einen Gasstrom (7) durch wenigstens eine zweite Abtrennvorrichtung (1b) strömen lässt, die stromabwärts der wenigstens einen ersten Abtrennvorrichtung (1a) angeschlossen ist, wobei die wenigstens eine zweite Abtrennvorrichtung (1b) umfasst:
wenigstens eine zweite Trocknungseinrichtung (14), die wenigstens ein zweites Trocknungselement (15) zum Trocknen des Gasstroms (7) umfasst.

14. Verfahren nach Anspruch 13, **gekennzeichnet durch**
Zuführen von Inertgas mit einer Inertgaszuführeinrichtung (23) in den Gasstrom (7); und Steuerung eines Anteils von enerten Gasen in dem Gasstrom (7) mit einer Steuereinrichtung (21), die zumindest teilweise auf Informationen basiert, die einen Inertisierungsgrad des Gasstroms (7) beschreiben.

15. Verfahren nach Anspruch 13 oder 14, **gekennzeichnet durch**:
Erfassen von Informationen, die einen Inertisierungsgrad des Gasstroms (7) beschreiben, mit einer Intertizationserfassungsvorrichtung (20).
